(19) Europäisches Patentamt
European Patent Office
Office européen des brevets

(11) EP 1 283 488 A1

(12) **EUROPÄISCHE PATENTANMELDUNG**

(43) Veröffentlichungstag:
**12.02.2003 Patentblatt 2003/07**

(51) Int Cl.[7]: **G06F 17/60**

(21) Anmeldenummer: **01810762.3**

(22) Anmeldetag: **07.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Vescore Solutions AG**
**9001 St. Gallen (CH)**

(72) Erfinder:
- **Oertmann, Peter**
**9000 St. Gallen (CH)**
- **Wittmann, Stefan**
**9000 St. Gallen (CH)**
- **Drobetz, Wolfgang**
**9010 St. Gallen (CH)**

(74) Vertreter: **Müller, Christoph Emanuel et al**
**Hepp, Wenger & Ryffel AG,**
**Friedtalweg 5**
**9500 Wil (CH)**

(54) **Computerbasiertes Verfahren zum Bestimmen von erwarteten Renditen von Anlageportfolios, Datenverarbeitungssystem, Serversystem und Clientsystem zum Durchführen dieses Verfahrens und Computerprogrammprodukt zur Durchführung des Verfahrens**

(57) Zum Bestimmen von erwarteten Überschussrenditen eines Anlageportfolios werden in einem Computersystem konsistente Risikoprämien für Asset Classes eines repräsentativen Anlageuniversums berechnet. Gleichzeitig wird laufend ein Risikoprofil der Asset Classen des Portfolios ermittelt. Die erwarteten Renditen ergeben sich durch Anweisung der Risikoprämien auf das Risikoprofil.

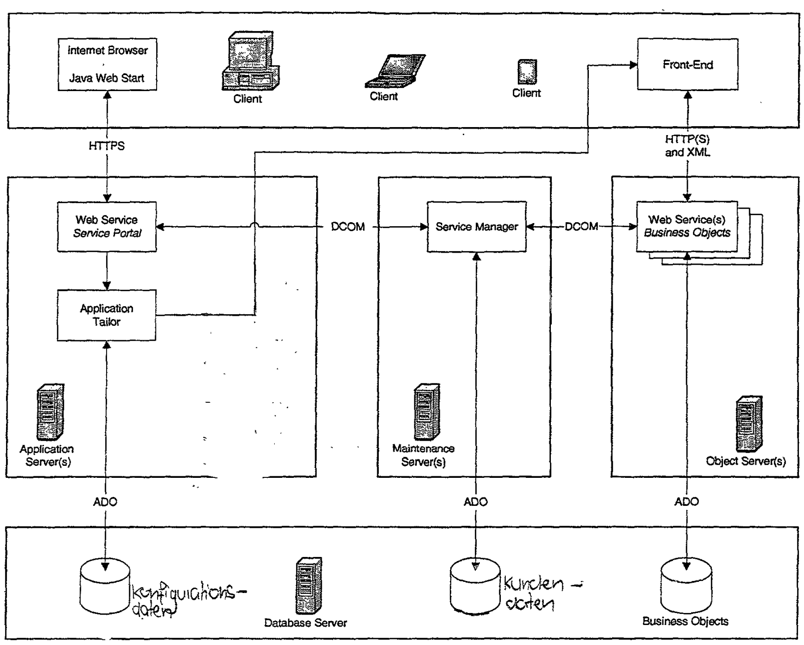


FIG.4

EP 1 283 488 A1

## Beschreibung

Die Erfindung betrifft ein computergestütztes Verfahren zum automatisierten Bestimmen von erwarteten Renditen von Anlageportfolios. Die Erfindung betrifft ausserdem ein Datenverarbeitungssystem, ein Serversystem und ein Clientsystem sowie ein Computerprogrammprodukt zum Durchführen dieses Verfahrens.

Vor allem bei institutionellen Anlegern und bei professionellen Portfolioverwaltern wie Fondsmanagern besteht ein Bedürfnis, die Rendite-Erwartung von Anlageportfolios zu objektivieren. Dabei sollen insbesondere die Renditen von einzelnen Asset Classes des Portfolios bestimmt werden, damit gegebenenfalls taktische oder strategische Neuausrichtungen der Anlagestrategie vorgenommen werden können.

Die Finanztheorie kennt verschiedene Modelle, welche erwartete Renditen von Assets beschreiben sollen. Ausgangspunkt dabei ist, dass die erwartete Rendite in einem Zusammenhang mit dem systematischen Risiko des Assets steht. In der Wissenschaft sind verschiedene Bewertungsansätze bekannt. Ein Überblick über solche Modelle findet sich in P. Oertmann, Global Risk Premia & International Investments, Deutscher Universitätsverlag, Wiesbaden, 1997 (ISBN 3-8244-6497-7).

Im Rahmen von Bewertungsmodellen werden erwartete Renditen von Aktien- und Obligationenmärkten eines Anlegeunisversums beschrieben. Es ist eine Aufgabe der vorliegenden Erfindung, Mittel zu finden, mit Hilfe derer auf der Grundlage von Bewertungsmodellen die erwarteten Renditen von spezifischen Anlageportfolios bestimmt bzw. objektiviert werden können.

Die vorliegende Erfindung beruht in erster Linie darauf, in einem repräsentativen, globalen Anlageuniversum Risikoprämien für vorbestimmte systematische Risikofaktoren zu bestimmen. Die Risikoprämien werden verwendet, um in Kombination mit einem Risikoprofil von Asset Classes eines spezifischen Anlageportfolios die erwarteten Renditen der Asset Classes des Anlageportfolios zu berechnen.

Im Rahmen der vorliegenden Erfindung werden Renditeerwartungen durch einen konditionierten Multifaktor-Bewertungsansatz (Conditional Multi Beta Pricing Model) beschrieben. Das Modell basiert darauf, dass langfristige Erwartungswerte der Renditen auf Aktien- und Obligationenmärkte durch eine inhärente multiple Faktorstruktur erfasst werden. Im Rahmen der Faktorstruktur sollen ausschliesslich globale Grössen Quellen systematischen Risikos darstellen. Die inhärente multiple Faktorstruktur wird durch eine Gruppe beobachtbarer global-ökonomischer Variablen repräsentiert. Die Faktor-Risikoprämien sind zeitvariabel. Eine eingehende Erklärung des im Rahmen der vorliegenden Erfindung verwendeten Bewertungsansatzes findet sich bei P. Oertmann (siehe oben). Der Inhalt dieser Publikation wird durch Querverweis in die vorliegende Anmeldung aufgenommen.

Ausgangspunkt für die vorliegende Erfindung ist die Annahme, dass die Beziehung zwischen Renditen und erwarteten Renditen auf internationalen Aktien- und Obligationenmärkten sowie den Veränderungen globaler Risikofaktoren durch das folgende K-Faktor Modell erfasst wird:

$$r_{it} = E[r_{it}] + \beta_{i1} \cdot \delta_{1t} + \beta_{i2} \cdot \delta_{2t} + ... + \beta_{ik} \cdot \delta_{kt} + \varepsilon_{it}$$

wobei

$$i = 1, 2, ..., n \text{ (Asset Classes)}$$

$$j = 1, 2, ..., k \text{ (Faktoren)} \quad (1a)$$

unter den Bedingungen:

$$E[\delta_j] = 0, j = 1, 2, ..., k \quad (1b)$$

$$E[\varepsilon_i] = 0 \; i = 1, 2, ..., n \quad (1c)$$

$$Var[\varepsilon_i] = \sigma_{\varepsilon i}^2 \leq \bar{\sigma}_{\varepsilon}^2 i = 1, 2, ..., n \quad (1d)$$

$$Cov[\varepsilon_i, \varepsilon_j] = \sigma_{ij}, i = 1, 2, ..., n, j = 1, 2, ..., n, \text{ und } i \neq j. (1e)$$

und wobei die Indizes, Parameter und Variablen im Modell folgende Bedeutungen haben:

- t (Zeitindex): Index für die Zeitperiode t. Diese Periode t beginnt im Zeitpunkt t-1 und endet im Zeitpunkt t.
- $r_{it}$ (Überschussrendite): Überschussrendite, die für die i-te Asset Class über die Periode t *gemessen* wird. Die Überschussrendite wird dabei auf Basis der folgenden Formel berechnet: $r_{it} = R_{it} - R_{ft-1}$, wobei $R_{it}$ die in stetiger Form berechnete Rendite der i-ten Asset Class bezeichnet und $R_{ft-1}$ den im Zeitpunkt t-1 ausgewiesenen stetigen Zinssatz für eine risikolose Anlage am Geldmarkt für eine spezifische Referenzwährung über die Periode t repräsentiert.
- $E[r_{it}]$ (Erwartete Überschussrendite): Überschussrendite, die für die i-te Asset Class für die Periode t auf Basis der zu Beginn der Periode im Zeitpunkt t-1 verfügbaren Informationen erwartet wird.
- $\delta_{jt}$ (Risikofaktor): Nichtantizipierte Komponente der Veränderung des j-ten Risikofaktors, gemessen über die Periode t. Die im Zeitpunkt t-1 antizipierte Veränderung des j-ten Risikofaktors ist explizit nicht enthalten.
- $\beta_{ij}$ (Faktorbeta): Sensitivität der Überschussrendite der i-ten Asset Class in bezug auf die nichtantizipierten Veränderungen des j-ten Risikofaktors.
- $\varepsilon_{it}$ (Residual-Überschussrendite): Unsystematische Komponente der über die Periode t gemessenen Überschussrendite der i-ten Asset Class.

Operatoren im Modell:

- E(...): Erwartungswert
- Var(...): Varianz
- Cov(...): Kovarianz

Das Modell wird in einer konditionierten Form verwendet. Unter der Annahme, dass die Risikoprämien für die Exposure der Überschussrenditen internationaler Asset Classes gegenüber den nichtantizipierten Veränderungen globalen Faktoren im Zeitverlauf schwanken, ergibt sich nachstehende Bewertungsrestriktion für den Querschnitt erwarteter Renditen (cross-sectional restriction):

$$E[r_{it}|\underline{\Phi}_{t-1}] = \lambda_{1t}(\underline{\Phi}_{t-1}) \cdot \beta_{i1} + \lambda_{2t}(\underline{\Phi}_{t-1}) \cdot \beta_{i2} + ... + \lambda_{kt}(\underline{\Phi}_{t-1}) \cdot \beta_{ik}$$

$$i = 1, 2, ..., n \text{ (Asset Classes)} \qquad (2)$$

wobei die Indizes, Parameter und Variablen im Modell folgende Bedeutungen haben:

- t (Zeitindex) : Siehe oben.
- $\beta_{ij}$ (Faktorbeta) : Siehe oben.
- $\underline{\Phi}_{t-1}$ (Ökonomische Informationsmenge): Informationsmenge im Zeitpunkt t-1. Diese umfasst sämtliche, öffentlich zur Verfügung stehenden Informationen über global-ökonomische Rahmenbedingungen. Formal wird die Informationsmenge durch einen Informationsvektor beschrieben: $\underline{\Phi}_{t-1} = (\varphi_{1,t-1}, \varphi_{2,t-1}, ..., \varphi_{\kappa,t-1}) \in R^{\kappa}$.
- $E[r_{it}|\underline{\Phi}_{t-1}]$ (Konditionierte Überschussrenditererwartung): Im Zeitpunkt t-1 erwartete Überschussrendite der i-ten Asset Class für die Periode t. Die Höhe der erwarteten Überschussrendite entspricht der zu Beginn der Periode, im Zeitpunkt t-1, verfügbaren Informationsmenge $\underline{\Phi}_{t-1}$.
- $\lambda_{jt}(\underline{\Phi}_{t-1})$ (Konditionierte Risikoprämie): Im Zeitpunkt t-1 erwartete Prämie für die Übernahme einer Einheits-Exposure gegenüber den nichtantizipierten Veränderungen des j-ten Risikofaktors durch eine Anlage (Faktorbeta $\beta_{ij}$=1). Die Höhe der erwarteten Kompensation für Faktorrisiko entspricht der zu Beginn der Periode, im Zeitpunkt t-1, verfügbaren Informationsmenge $\underline{\Phi}_{t-1}$.

Operatoren im Modell:

- E[...|...] : Konditionierter Erwartungswert

Gleichung (2) spezifiziert Erwartungswerte für die Überschussrenditen, die mit den Asset Classes des Universums über die Zeitperiode zwischen t-1 und t erzielt werden können. Diese Erwartungswerte sind konsistent mit den unterschiedlichen Risikoprofilen der einzelnen Asset Classes sowie der im Zeitpunkt t-1 zugänglichen Informationsmenge über ökonomische Rahmenbedingungen. Das Modell basiert auf der Annahme, dass der konditionierte Erwartungswert für die Überschussrendite jeder Asset Class in einer exakten linearen Beziehung zu k Faktor-Risikoprämien steht.

Es wird angenommen, dass ein wohlspezifiziertes Set von globalen Instrumentalvariablen, $\underline{Z}_{t-1} = (Z_{1,t-1}, Z_{2,t-1},...,Z_{h,t-1})$, in hinreichender Weise die für die Preisbildung auf internationalen Aktien- und Obligationenmärkten zum Zeitpunkt t-1 relevanten Informationen widerspiegelt. Grundsätzlich kann der 1×h-Instrumentalvektor $\underline{Z}_{t-1}$ als eine Teilmenge des umfassenden 1×κ-Informationsvektors $\underline{\Phi}_{t-1}$ betrachtet werden. Die Beziehung zwischen der im Zeitpunkt t-1 erwarteten j-ten Risikoprämie und den Werten eines solchen Instrumentalvektors zu Beginn des Monats ist wie folgt spezifiziert:

$$\lambda_{jt}(\underline{Z}_{t-1}) = \omega_{j0} + \omega_{j1} \cdot Z_{1,t-1} + \omega_{j2} \cdot Z_{2,t-1} + ... + \omega_{jh} \cdot Z_{h,t-1}$$

$$j = 1, 2, ..., k \text{ (Risikoprämien)} \qquad (3)$$

wobei die Indizes, Parameter und Variablen im Modell die folgenden Bedeutungen haben:

- t (Zeitindex): Siehe oben.
- $\lambda_{jt}(\underline{\Phi}_{t-1})$ (Konditionierte Risikoprämie): Siehe oben.
- $Z_{v,t-1}$ (Instrumentalvariable): Im Zeitpunkt t-1 beobachtbare Ausprägung der v-ten Instrumentalvariable zur Prognose globaler Risikoprämien. Die Instrumentalvariable ist ein Element der ökonomischen Informationsmenge: $\underline{Z}_{t-1} = (Z_{1,t-1}, Z_{2,t-1},...,Z_{h,t-1})$.
- $\omega_{jv}$ (Risikoprämien-Dynamik-Parameter): Parameter zur Beschreibung des Wirkungszusammenhangs zwischen der Ausprägung der v-ten Instrumentalvariable und der Höhe der j-ten Risikoprämie

Die Gleichung (3) beschreibt die schwankende Höhe der im Modell eingesetzten Risikoprämien. Vor dem Hintergrund der Gleichung (3) kann die im Rahmen des Modells motivierte konditionierte Bewertungsrestriktion wie folgt notiert werden:

$$E\left[r_{it} \middle| \underline{Z}_{t-1}\right] = \sum_{j=1}^{k} \sum_{v=0}^{h} \omega_{jv} \cdot Z_{v,t-1} \cdot \beta_{ij}$$

$$i = 1, 2, ..., n \text{ (Asset Classes)} \qquad (4)$$

Die dem Querschnitt von erwarteten Renditen auferlegte Bewertungsrestriktion basiert direkt auf den Risikoprämien-Dynamik-Parametern ω. Diese Koeffizienten beschreiben den Zusammenhang zwischen Veränderungen der ökonomischen Informationsmenge und der Höhe der erwarteten Risikoprämien. Da die Faktor-Risikoprämien via Gleichung (2) als für alle Asset Classes identisch restringiert sind, ergeben sich gleichermassen Querschnittsrestriktionen für die die Variation dieser Risikoprämien beschreibenden Koeffizienten $\omega_{jv}$, j = 1, 2, ..., k, v = 0, 1, 2, ..., h.

Aus der Substitution der Querschnittsrestriktion (4) in das Faktormodell (1) resultiert die nichtlineare Basisgleichung des der vorliegenden Erfindung zu Grunde liegenden Modells.

$$r_{it} = \sum_{j=1}^{k} \sum_{v=0}^{h} \omega_{jv} \cdot Z_{v,t-1} \cdot \beta_{ij} + \sum_{j=1}^{k} \beta_{ij} \cdot \delta_{jt} + \varepsilon_{it}$$

$$i = 1, 2, ..., n \text{ (Asset Classes)} \qquad (5)$$

Diese Gleichung repräsentiert die im Modell angenommene strukturelle Beziehung zwischen der monatlichen Rendite der i-ten Asset Class und (i) der Exposure des Marktes gegenüber globalen Risikofaktoren, (ii) nichtantizipierten Veränderungen der Risikofaktoren sowie (iii) den mit diesen Risikofaktoren verknüpften zeitvariablen Risikoprämien.

Ausgehend von diesem Modell werden erfindungsgemäss in einem computerbasierten Verfahren erwartete Überschussrenditen von Anlage-Portfolios automatisch bestimmt. Zu diesem Zweck werden als Ausgangspunkt ein repräsentatives Anlageuniversum und Risikofaktoren vordefiniert. Beim Ablauf des Verfahrens werden die Risikoprämien RPi für die Risikofaktoren an Hand der Asset Classen des vordefinierten Anlageuniversums in einem Computersystem auf Grund von automatisch zur Verfügung gestellten Marktdaten wiederholt berechnet. Die Risikoprämien sind zeitabhängig. Die ermittelten Risikoprämien werden anschliessend in einer Datenbank gespeichert. Die Risikoprämien werden universell über alle repräsentativen Asset Classen ermittelt. Sie sind daher konsistent und Asset Class unabhängig. Daraus können aktuelle und langfristige (d.h. über einen bestimmten Zeitraum gemittelte) Risikoprämien bestimmt werden.

In einem weiteren Schritt wird für ein spezifisches Anlageportfolio, für das die Überschussrenditen bestimmt werden sollen, ein Risikoprofil ermittelt. Spezifisches Anlageportfolio heisst in diesem Zusammenhang die Gesamtheit der Asset Classes eines Benutzers des erfindungsgemässen Verfahrens, z.B. ein Fondsmanager. Das spezifische Anlageportfolio deckt sich nicht notwendigerweise mit dem repräsentativen, globalen Anlageuniversum. Das Risikoprofil beschreibt die Sensitivität von einzelnen Asset Classes des Portfolios gegenüber systematischen Risikofaktoren. Das Risikoprofil βij ist ebenfalls zeitabhängig. Die derart ermittelten Werte werden ebenfalls in einer Datenbank gespeichert.

Die erwarteten Renditen der Asset Classen des Anlageportfolios werden anschliessend auf der Grundlage der für das repräsentative Anlageuniversum ermittelten Risikoprämien und des Risikoprofils für die entsprechende Asset Class gemäss der folgenden Formel ermittelt.

$$\begin{pmatrix} r_1 \\ . \\ . \\ . \\ r_n \end{pmatrix} = \begin{pmatrix} \beta_{11} & . & . & . & \beta_{1k} \\ . & & & & \\ . & & & & \\ . & & & & \\ \beta_{n1} & . & . & . & \beta_{nk} \end{pmatrix} \cdot \begin{pmatrix} RP_1 \\ . \\ . \\ . \\ RP_k \end{pmatrix}$$

wobei

- $r_j$ die erwartete Überschussrendite für die i-te Asset Class des Portfolios ist,
- $\beta_{ij}$ die Sensitivität der i-ten Asset Class des Portfolios gegenüber dem j-ten Risikofaktor ist und
- $RP_j$ die Risikoprämie für den j-ten Risikofaktor,
- n die Anzahl Asset Classes und
- k die Anzahl der Risiken bezeichnen.

Die Bestimmung der Risikoprämien und der Beta-Werte des Risikoprofils des repräsentativen Anlegeuniversums erfolgt dabei vorzugsweise durch Generalized Method of Moments (GMM) aufgrund der nachfolgenden Formel (6).

Die Erfindung wird im Rahmen eines Systems bestehend aus nicht-linearen Basisgleichungen (5) empirisch implementiert, wobei die Anzahl der Gleichungen der Anzahl von vordefinierten Asset Classes im Universum entspricht. Dieses Gleichungssystem kann wie folgt notiert werden:

$$\begin{pmatrix} r_{1t} \\ \vdots \\ r_{it} \\ \vdots \\ r_{nt} \end{pmatrix} = \begin{pmatrix} \beta_{11} \cdots \beta_{1k} \\ \vdots \\ \beta_{ij} \\ \vdots \\ \beta_{n1} \cdots \beta_{nk} \end{pmatrix} \cdot \begin{pmatrix} \omega_{10} \cdots \omega_{1h} \\ \vdots \\ \omega_{jv} \\ \vdots \\ \omega_{k0} \cdots \omega_{kh} \end{pmatrix} \cdot \begin{pmatrix} Z_{0,t-1} \\ \vdots \\ Z_{v,t-1} \\ \vdots \\ Z_{h,t-1} \end{pmatrix} + \begin{pmatrix} \beta_{11} \cdots \beta_{1k} \\ \vdots \\ \beta_{ij} \\ \vdots \\ \beta_{n1} \cdots \beta_{nk} \end{pmatrix} \cdot \begin{pmatrix} \delta_{1t} \\ \vdots \\ \delta_{jt} \\ \vdots \\ \delta_{kt} \end{pmatrix} + \begin{pmatrix} \varepsilon_{1t} \\ \vdots \\ \varepsilon_{it} \\ \vdots \\ \varepsilon_{nt} \end{pmatrix} \quad (6)$$

wobei die Indizes, Parameter und Variablen im Modell folgende Bedeutung haben:

- t (Zeitindex) : Siehe oben.
- i (Asset Class-Index): i = 1, ..., n.
- j (Risikofaktor-Index): j = 1, ..., k.
- v (Instrumentalvariablen-Index): v = 0, ..., h
- $r_{it}$ (Überschussrendite für die Asset Class des repräsentativen Anlageuniversums): Siehe oben.
- $\delta_{jt}$ (Risikofaktor): Siehe oben.
- $\beta_{ij}$ (Faktorbeta): Siehe oben.
- $Z_{v,t-1}$ (Instrumentalvariable): Siehe oben.
- $\omega_{jv}$ (Risikoprämien-Dynamik-Parameter): Siehe oben.
- $\varepsilon_{it}$ (Residual-Überschussrendite): Siehe oben.

Das Gleichungssystem (6) ermöglicht die gleichzeitige, ökonometrische Bestimmung der Risikoprofile der repräsentativen Asset Classes im Universum sowie der die Zeitvariabilität der globalen Risikoprämien erfassenden Dynamik-Parameter. Auf der rechten Seite des Gleichungssystems sind drei Komponenten additiv verknüpft:

Komponente-1 (Zeitvariable Risikoprämien): Die erste Komponente des Modells beschreibt die in den monatlichen Asset Class-Renditen enthaltenen, variablen globalen Risikoprämien:

$$\text{"Komponente 1"} = \begin{pmatrix} \beta_{11} \cdots \beta_{1k} \\ \vdots \\ \beta_{ij} \\ \vdots \\ \beta_{n1} \cdots \beta_{nk} \end{pmatrix} \cdot \begin{pmatrix} \omega_{10} \cdots \omega_{1h} \\ \vdots \\ \omega_{jv} \\ \vdots \\ \omega_{k0} \cdots \omega_{kh} \end{pmatrix} \cdot \begin{pmatrix} Z_{0,t-1} \\ \vdots \\ Z_{v,t-1} \\ \vdots \\ Z_{h,t-1} \end{pmatrix}$$

Die Risikoprämien RPi entsprechen dabei dem Produkt der Risikoprämien Dynamik-Parameter-Matrix Ω und dem Instumentalvariablen Vektor Z.

Komponente-2 (Risikofaktor-induzierte Renditeschocks): Die zweite Komponente des Modells beschreibt die durch nichtantizipierte Faktorveränderungen verursachten Abweichungen der monatlichen Renditen von ihren variablen monatlichen Erwartungswerten:

$$\text{"Komponente 2"} = \begin{pmatrix} \beta_{11} \cdots \beta_{1k} \\ \vdots \\ \beta_{ij} \\ \vdots \\ \beta_{n1} \cdots \beta_{nk} \end{pmatrix} \cdot \begin{pmatrix} \delta_{1t} \\ \vdots \\ \delta_{jt} \\ \vdots \\ \delta_{kt} \end{pmatrix}$$

Komponente-3 (Asset Class-spezifische Renditeschocks): Die dritte Komponente des Modells enthält die Abweichungen der monatlichen Renditen von ihren zeitvariablen Erwartungswerten, die nicht auf die unterstellte Faktorstruktur zurückführbar sind, also quasi unsystematische, nicht durch das Modell erklärte Renditekomponenten:

$$"\text{Komponente 3}" = \begin{pmatrix} \varepsilon_{1t} \\ \vdots \\ \varepsilon_{it} \\ \vdots \\ \varepsilon_{nt} \end{pmatrix}$$

Die Struktur des Modells (6) impliziert zwei Arten von Restriktionen hinsichtlich des Querschnitts der (Durchschnitts)-Renditen der Core Asset Classes im Universum:

Restriktion-1: Die Risikoprämien-Dynamik-Parameter $\omega_{jv}$, j = 1, 2, ..., k, v = 0, 1, 2, ..., h unterliegen im Rahmen der Komponente 1 einer Gleichheitsrestriktion über den Querschnitt der (Core) Asset Class Renditen. Diese Restriktion stellt sicher, dass die in den Überschussrenditen enthaltenen globalen Risikoprämien über den Querschnitt der Asset Classes gleich sind.

Restriktion-2: Das System enthält grundsätzlich keinen konstanten Term. Diese Restriktion beinhaltet, dass erwartete Renditen grundsätzlich keine konstanten Komponenten einschliessen, die nicht den Risikoprämien zugeordnet werden können.

Im Rahmen des Modells (6) werden die $n \times k$ Faktorbetas und die $k \times h$ $\omega$-Parameter (Risikoprämien-Dynamik-Parameter) simultan ermittelt. Dabei werden die unterstellte inhärente Faktorstruktur sowie die Zeitvariabilität der Risikoprämien auf Basis von ökonomischen Grössen modelliert.

Spezifikation der Faktoren: Die in das Modell eingehenden Risikofaktoren, $\{\delta_{jt}$, j = 1, 2, ..., k$\}$, sind beobachtbare Grössen. In der vorliegenden Erfindung werden vorteilhaft ausschliesslich systematische Risikofaktoren eingesetzt, die als langfristige Wertetreiber betrachtet werden. Eine solche Wahrnehmung des systematischen Risikos - die Konzentration auf globale Einflüsse - ist konsistent mit der Spezifikation der internationalen Gleichgewichts- und Arbitragebewertungsmodelle. Die berücksichtigten Risikofaktoren sind z.B. Weltaktienmarktrisiken, Währungsrisiken, Zinsrisiken und/oder Rohstoffpreis-Risiken.

Spezifikation der Instrumentalvariablen: Die in das Modell eingehenden Instrumentalvariablen, $\{Z_{v,t-1}$, v = 1, 2, ..., h$\}$, sind global-ökonomische Parameter. Dies entspricht der Intuition, dass auf zunehmend integrierten Kapitalmärkten globale Risikoprämien grundsätzlich durch globale Rahmenbedingungen determiniert werden. Die Ermittlung der Risikoprämien erfolgt dabei vorteilhaft gleichzeitig auf der Grundlage der Gleichung (6). Diese Art der Berechnung führt zu in sich konsistenten Resultaten. Die Instrumentalvariablen eskomptieren die Erwartungen hinsichtlich der globalen wirtschaftlichen Entwicklung (Wirtschaftszyklen). Instrumente sind beispielsweise Term-Spread, Kreditrisiko-Spread, KGV/PE und TED-Spread.

Die Ermittlung der Risikoprämien und des Risikoprofils und die auf diesen Werten basierende Bestimmung der Überschussrenditen der Asset Classen erfolgen vorzugsweise in einem zentralen Computersystem, auf welches der Anwender mit einem Client zugreifen kann. Eine Mehrzahl von Anwendern mit unterschiedlichen Anlagenportfolios kann auf die gleichen, universell bestimmten und universell gültligen Daten zugreifen. Für die vorab definierten Asset Classes eines jeden Anlageportfolios werden die erwarteten Überschussrenditen in der erläuterten Art und Weise bestimmt. Das Verfahren eignet sich besonders gut zum Betrieb durch einen Application Service Provider (ASP). Die Benutzer beziehen vom Betreiber des erfindungsgemässen Verfahrens kundenspezifisch berechnete Werte, wobei die Berechnung auf dem zentralen Server abläuft.

Das Implementierung des Modells wird auf Basis von nichtantizipierten Faktorveränderungen durchgeführt. Diese Faktorinnovationen werden vorzugsweise ausserhalb des Bewertungsmodells im Rahmen eines erweiterten vektorautoregressiven (VAR) Systems bestimmt. Diesem System liegt die folgende Basisgleichung zugrunde:

(VAR-Basisgleichung für das Prewhitening der Risikofaktoren)

$$\delta^*_{jt} = c_{j0} + \sum_{\upsilon=1}^{k} c_{j\nu} \cdot \delta^*_{\nu,t-1} + \sum_{\nu=1}^{h} d_{j\nu} \cdot Z_{\nu,t-1} + \delta_{jt}$$

$$j = 1, 2, ..., k \text{ (Risikofaktoren)} \qquad (7)$$

Indizes, Parameter und Variablen im Modell:

t (Zeitindex) : Siehe oben.
j, ν (Risikofaktor-Index): j = 1, ...,k, ν = 1, ..., k
v (Instrumentalvariablen-Index): v = 1, ..., h
$\delta_{jt}$ (Risikofaktor): Nichtantizipierte Komponente der Veränderung des j-ten Risikofaktors, gemessen über die Periode t.
$\delta^*_{jt}$ (Roh-Risikofaktor): Gesamte (antizipierte + nichtantizipierte) Veränderung des j-ten Risikofaktors, gemessen über die Periode t.
$Z_{v,t-1}$ (Instrumentalvariable): Siehe oben.
$c_{j0}, c_{j\nu}, d_{jv}$ (VAR-Regressionskoeffizient): ν = 1, ..., k; v = 1, ..., h

Die VAR-Basisgleichung für das Prewhitening der Risikofaktoren umfasst drei Komponenten: Prewhitening-Komponente-1: Die Konstante bereinigt die Veränderungen eines Roh-Risikofaktors $\delta^*_{jt}$ um einen langfristig konstanten Trend:

$$\text{" Komponente 1"} = c_{j0}$$

Prewhitening-Komponente-2 (Quasi-Orthogonalisierung über den Querschnitt der Faktoren): Die gewichtete Summe der um eine Zeitperiode verzögerten Veränderungen aller Risikofaktoren (t-1) bereinigt die Veränderungen eines Roh-Risikofaktors $\delta^*_{jt}$ um Autokorrelationseffekte und verzögerte Informationen in anderen Faktoren:

$$\text{"Komponente 2"} = \sum_{\upsilon=1}^{k} c_{j\nu} \cdot \delta^*_{\upsilon,t-1}$$

Prewhitening-Komponente-3 (Orthogonalisierung zu erwarteten Renditekomponenten): Die gewichtete Summe der um eine Zeitperiode verzögerten Instrumentalvariablen (t-1) bereinigt die Veränderungen eines Roh-Risikofaktors $\delta^*_{jt}$ um Informationen, die zur Beschreibung der erwarteten Risikoprämien im Modell herangezogen werden:

$$\text{"Komponente 3"} = \sum_{v=1}^{h} d_{jv} \cdot Z_{v,t-1}$$

Die Zeitreihe der Residuen der j-ten Gleichung des VAR-Systems bildet dann die im Modell verwendete Zeitreihe für Innovationen des j-ten Risikofaktors, $\{\delta_{jt}, t = 1, ..., T\}$. Damit haben alle Faktorzeitreihen aufgrund dieses Vorgehens einen Mittelwert von Null.

Der Betrieb des Verfahrens gemäss der vorliegenden Erfindung erfolgt vorzugsweise auf einem zentralen Server, auf welchen die Endbenutzer zugreifen können. Insbesondere ist der Server als Web-Server ausgebildet, sodass über das Protokoll https zugegriffen werden kann. Der Betreiber des Servers bietet das Verfahren als Application Service Provider (ASP) an.

Gemäss einem bevorzugten Ausführungsbeispiel der Erfindung wird die erwartete Überschussrendite für jede Asset Class des Portfolios in einzelne Fundamentalkomponenten aufgeteilt. Die einzelnen Fundamentalkomponenten bezeichnen den Anteil, welche die einzelnen Risikofaktoren an der erwarteten Rendite einer Asset Class haben.

Im Rahmen der vorliegenden Erfindung ist es denkbar, sowohl aktuelle Risikoprämien als auch langfristige Risikoprämien des Anlageuniversums zu bestimmen. Auf dieser Grundlage können langfristige und aktuelle erwartete Überschussrenditen des Anlageportfolios bestimmt werden.

Gemäss einem bevorzugten Ausführungsbeispiel werden als Risikofaktoren Zinssätze, Wechselkurse, der Aktienmarkt und Rohstoffpreise berücksichtigt. Es hat sich herausgestellt, dass sich mit diesen vier Risikofaktoren ausreichend zuverlässige Resultate ergeben.

Das erfindungsgemässe Verfahren läuft weitgehend automatisch auf einem Datenverarbeitungssystem ab. Zur Durchführung des Verfahrens weist das System Mittel zum automatischen Bestimmen von aktuellen und/oder langfristigen zeitabhängigen universalen Risikoprämien sowie Mittel zum Speichern dieser Risikoprämien auf. Das System enthält ausserdem Mittel zum Bestimmen von zeitabhängigen Beta-Werten eines Risikoprofils für ein bestimmtes Anlageportfolio. Das Risikoprofil beschreibt die Sensitivität der Asset Classes des spezifischen Anlageportfolios gegenüber systematischen Risikofaktoren. Das System weist ausserdem Mittel zum Berechnen von erwarteten Überschussrenditen der Asset Classes des spezifischen Anlageportfolios gemäss der folgenden Formel auf:

$$\begin{pmatrix} r_1 \\ \cdot \\ \cdot \\ \cdot \\ r_n \end{pmatrix} = \begin{pmatrix} \beta_{11} & \cdot & \cdot & \cdot & \beta_{1k} \\ \cdot & & & & \\ \cdot & & & & \cdot \\ \cdot & & & & \\ \beta_{n1} & \cdot & \cdot & \cdot & \beta_{nk} \end{pmatrix} \cdot \begin{pmatrix} RP_1 \\ \cdot \\ \cdot \\ \cdot \\ RP_k \end{pmatrix}$$

wobei

- $r_j$ die erwartete Überschussrendite für die i-te Asset Class des Portfolios ist,
- $\beta_{ij}$ die Sensitivität der i-ten Asset Class des Portfolios gegenüber dem j-ten Risikofaktor ist,
- $RP_j$ die Risikoprämie für den j-ten-Risikofaktor ist,
- n die Anzahl Asset Classes und
- k die Anzahl der Risiken ist

Bei einer anderen Anzahl von berücksichtigten Risiken ändert sich entsprechend die Anzahl der Faktor-Betas und der Risikoprämien.

Das Datenverarbeitungssystem ist vorteilhaft direkt mit einem Lieferanten von Marktdaten verbunden. Marktdaten können dadurch direkt eingelesen und verwertet werden. Beispielsweise können die Marktdaten von Primark/ Datastream eingesetzt werden.

Das erfindungsgemässe System ist vorteilhaft zur Bestimmung der Rendite einer Mehrzahl von Anlageportfolios ausgebildet, wobei für die Bestimmung der Überschussrenditen aller Anlageportfolios die gleichen, universell bestimmten Risikoprämien verwendet werden. Einzelne Anleger können über eine Schnittstelle die erwarteten Überschussrenditen der Asset Classes ihres spezifischen Anlageportfolios abfragen.

Vorteilhaft weist das System Ausgabemittel auf, mittels welchem die erwartenden Renditen für jede Asset Class eines spezifischen Anlageportfolios einzeln, vorzugsweise auf einem dezentralen Client-System, grafisch darstellbar sind. Gemäss einer weiteren bevorzugten Ausführungsform weist das System Mittel zum grafischen Darstellen der einzelnen, von den Risikofaktoren abhängigen Fundamentalkomponenten der erwarteten Überschussrenditen der einzelnen Asset Classes auf. Der Benutzer kann damit den Einfluss von einzelnen Risiken auf sein spezifisches Anlageportfolio laufend überprüfen und gegebenenfalls Umschichtungen an der Portfoliostruktur vornehmen.

Ein weiterer Aspekt der Erfindung betrifft ein Client-System zum Bestimmen von erwarteten Überschussrenditen eines anlegerspezifischen Anlageportfolios. Das Client-System enthält Mittel zum Identifizieren des Anlegers und eine Datenschnittstelle, mittels welcher der Client mit einem Server verbindbar ist, auf welchem in der vorstehenden beschriebenen Art und Weise erwartete Überschussrendite berechenbar sind. Der Client weist ausserdem Mittel zum Anzeigen der erwarteten Rendite des Anlageportfolios auf.

Ein weiterer Aspekt der Erfindung betrifft ein Computerprogramm Produkt, welches das vorstehend beschriebene Verfahren ausführen kann, wenn es auf einem Computer läuft.

Die Erfindung wird im Folgenden an Hand eines Ausführungsbeispiels und an Hand von Figuren näher erläutert.

Es zeigen:

Figur 1 Ein Flow-Chart der den Ablauf des Verfahrens gemäss der Erfindung zeigt,

Figur 2 Darstellung der berechneten erwarteten Renditen von verschiedenen Asset Classes eines spezifischen Anlageportfolios,

Figur 3 Aufteilung der erwarteten Renditen von Asset Classes eines spezifischen Anlageportfolios in Fundamentalkomponenten und

Figur 4 Schematische Darstellung eines erfindungsgemässen Computersystems

In Figur 1 ist der Ablauf des erfindungsgemässen Verfahrens dargestellt. Im ersten Schritt 1 werden aktuelle Marktdaten ermittelt. Die Ermittlung der Marktdaten erfolgt beispielsweise auf einer monatlichen Basis. Im vorliegenden Fall werden Marktdaten von Primark/Datastream bezogen.

Als Marktdaten werden typischerweise laufend Werte von folgenden Preisindizes und makroökonomischen Grössen über einen historischen Zeitraum von beispielsweise 144 Monaten ermittelt und in einer Datenbank gespeichert:

- Preisindezes weltweiter Aktienmärkte
- Aktienpreisindizes weltweiter Branchen
- Preisindizes weltweiter Bondmärkte
- Wechelskurse globaler Währungen
- Rohstoffpreise
- Zinssätze in den G7 Ländern für verschiedene Laufzeiten
- Zinssätze für Unternehmensobligationen mit unterschiedlichen Ratings
- Relative BSP-Gewichte der G7 Länder
- Kurs-Gewinn-Verhältnisse (KGV) auf den G7 Aktienmärkten
- Implizite Aktienmarktvolatilitäten

Auf der Grundlage dieser Marktdaten werden in Schritt 2 mit der vorstehenden Gleichung (6) die Risikoprämien von vorbestimmten repräsentativen Asset Classen im Anlageuniversum bestimmt. Im vorliegenden Fall werden Risikoprämien für die vier Risiken Zinssätze, Wechselkurse, Rohstoffpreise und Aktienmarkt ermittelt. Die Asset Classen des Anlageuniversums sind wie folgt definiert:

- Nationale Aktienmärkte:

  Aktien USA, Aktien Japan, Aktien Schweiz, Aktien Australien, Aktien Hong Kong, Aktien Grossbritannien, Aktien EMU (jeweils breite Marktindizes)

- Nationale Obligationenmärkte:

  Obligationen USA, Obligationen Japan, Obligationen Schweiz, Obligationen EMU (jeweils breite Marktindizes)

- Geldmärkte:

  US-Dollar, Japanischer Yen, Euro (jeweils 1-Monats Geldmarktzinssaätze)

Die Ermittlung der Risikoprämien erfolgt durch Schätzung mit GMM der Formel (6), wobei die Risikoprämien dem Produkt von der aus den Risikoprämien-Dynamik Parametern $\omega_{jv}$ gebildeten Risikoprämien-Dynamik-Matrix $\Omega$ und dem Instrumental-Variablen-Vektor $Z_{t-1}$ entspricht. Auf Grund der bereits bekannten Risikoprämien zu früheren Zeitpunkten kann gleichzeitig eine langfristige Risikoprämie als Mittel über einen bestimmten Zeitrang, beispielsweise 48 Monate ermittelt werden.

In Schritt 3 werden portfoliospezifische Faktor-Betas $\beta_{ij}$, das heisst, die Sensitivität der Überschussrendite der i-ten Asset Class des anlegespezifischen Portfolios in Bezug auf nicht antizipierte Veränderungen des j-ten Risikofaktors ermittelt. Die Bestimmung von $\beta_{ij}$ erfolgt durch lineare Regression. Daraus ergibt sich eine Art ökonomischer Fingerabdruck des entsprechenden Anlageportfolios.

Die Faktor-Betas der anlegerspezifischen Asset Classes werden durch lineare Regression der anlegerspezifischen Rendite auf die Risikofaktoren ermittelt. Dabei werden die gleichen Risikofaktoren wie für die Schätzung der Risikoprämien gemäss Gleichung (6) verwendet, also beispielsweise Aktienmarktrisiko, Zinsrisiko, Währungsrisiko, und Rohstoffpreisrisiko. Die lineare Regressionsgleichung für die i-te anlegerspezifische Asset Class wird durch das folgende k-dimensionale Faktormodell erfasst:

$$R_{It} = \alpha_i + \beta_{i1} \cdot F_{1t} + \beta_{i2} \cdot F_{2t} + ... + \beta_{ik} \cdot F_{kt} + \varepsilon_{it}$$

wobei
i = 1, 2, ...., n (anlegerspezifische Asset Classes)
j = 1, 2, ...., k (Faktoren)

Die Faktoren, welche mit $F_{jt}$ bezeichnet sind, gehen in diesem Fall vorzugsweise als historische Zeitreihen (d.h. ohne Korrektur um die erwarteten Faktorveränderungen) in die lineare Regression ein. Der k-dimensionale Vektor mit Betakoeffizienten $\beta_{ij}$ für dei i-te anlegerspezifische Asset Class bildet das Risikoprofil (resp. den ökonomischen Fingerabdruck) dieser Asset Class.

Die erwarteten Überschussrenditen der Asset Classen eines Portfolios bilden einen Vektor, dessen Dimension der Anzahl Asset Classen des Portfolios entspricht. Dieser Vektor ergibt sich als Produkt einer Matrix mit den Faktor-Betas und einem aus den Risikoprämien bestehenden Vektor. Diese Berechnung wird in Schritt 4 durchgeführt. Je nach dem, ob die langfristigen oder die aktuellen Risikoprämien berücksichtigt werden, wird eine aktuelle oder eine langfristige Überschussrendite bestimmt.

Die nachfolgende Tabelle zeigt ein Beispiel von erwarteten Überschussrenditen auf der Grundlage von Fundamentaldaten:

| Risikofaktor | Risikoprofil | | Risikoprämie | | Anteil an der Rendite |
|---|---|---|---|---|---|
| Marktrisiko | 1,54 | X | 1,20% | = | 1,85% |
| Rohstoffpreise | - 0,09 | X | - 7,41% | = | 0,67% |
| Währungskurse | 1,67 | X | - 0,37% | = | -0,62% |
| Zinssätze | 0,43 | X | 0,55% | = | 0,24% |

Obige Tabelle zeigt die erwartete Überschussrendite für Technologieaktien auf der Grundlage ihres spezifischen Risikoprofils und auf der Grundlage von globalen Risikoprämien. Die in der vierten Spalte dargestellten globalen Risikoprämien sind für jede Asset Class gleich. Das Risikoprofil in der zweiten Spalte ist spezifisch für die Asset Class "Technologieaktien". Das Risikoprofil sagt aus, dass beim Anstieg der Zinsrate um 10 % der Aktienkurs von Technologieaktien im Durchschnitt um 4,3 % (daher der Faktor 0,43 im Risikoprofil) steigt. Aus der Multiplikation ergeben sich 4 Fundamental-Komponenten der erwarteten Überschussrendite der Asset Class der "Technologieaktien". Die erwartete Überschussrendite beträgt 2,15% und ergibt sich durch die Addition der einzelnen Fundamentalkomponenten (1,85 + 0,67 - 0,62 + 0,24 = 2,15).

Die derart berechneten Überschussrenditen werden in Schritt 5 graphisch dargestellt.

In Figur 2 ist eine grafische Darstellung der auf diese Weise berechneten Überschussrenditen eines spezifischen Portfolios dargestellt. Das Portfolio ist in 19 Asset Classes aufgeteilt, in 13 länderspezifische Aktienmärkte und 6 nach Laufzeit und Markt aufgeteilte Obligationen. Die Überschussrenditen für die einzelnen Asset Classes sind als Balken grafisch dargestellt. In Figur 3 ist eine Aufteilung der Überschussrenditen gemäss Figur 2 in die einzelnen Fundamental-Komponenten dargestellt. Figur 3 zeigt den Einfluss der Risiken Weltaktienmarkt, Rohstoffpreise, Wechselkurse und Zinssätze auf die Überschussrenditen der einzelnen Asset Classes. Die Fundamentalkomponenten sind (grau/schwarz/schraffiert/weiss) als Balkendiagramm einzeln dargestellt.

In Figur 4 ist die Architektur der Anwendung, welche einen Betrieb des erfindungsgemässen Verfahrens erlaubt schematisch dargestellt. Ein Endanwender identifiziert sich über einen bestimmten Benutzernamen mit Passwort. Durch den Application Tailor wird anschliessend ein spezielles Frontend erzeugt und dem Endanwender angezeigt. Über das Frontend erhält der Benutzer Zugriff zu dem als Business-Objects bezeichneten Dienst.

Die Architektur enthält verschiedene logische Server, die unterschiedliche Aufgaben wahrnehmen. Es kann sich dabei physisch um einen oder um verschiedene Rechner handeln.

Auf einem Application Server sind Frontendprodukte abgelegt. Der Application Server stellt die Anzeige des Frontends an den Endanwender sicher. Beispielsweise können im Frontend kundenspezifische grafische Darstellungen oder spezifische Anordnungen ausgewählt werden. Die Software wird entsprechend zugeschnitten, bevor sie dem Kunden zur Verfügung gestellt wird.

Ein Maintenance-Server stellt die Kontrolle der Zugangsrechte zu den einzelnen Anwendungen und zu den Businessobjects sicher. Im Maintenance-Server sind kundenspezifische Daten abgelegt.

Ein Object-Server stellt sogenannte Business-Objects zur Verfügung. Dies sind insbesondere Datenreihen, berechnete Werte, usw.

Die Daten für die Businessobjects und Konfigurationen sowie auch kundenspezifische Daten sind auf einem Datenbankserver abgelegt.

Zugangspunkt für den Kunden, der die Anwendung gemäss der vorliegenden Erfindung benutzen will, ist das Frontend. Die Kommunikation vom Client zu den Servern, auf welchen das erfindungsgemässe Verfahren abläuft, erfolgt über http(S) und/oder XML.

Marktdaten von kommerziellen Datenanbietern werden als plug-in in das System eingebunden und direkt online eingelesen.

Im vorliegenden Fall wurden vorstehend mehrmals englische Bezeichnungen für die einzelnen Komponenten verwendet, da dies die auch in deutscher Sprache gängigen Bezeichnungen sind.

## Patentansprüche

1. Computerbasiertes Verfahren zum automatischen Bestimmen von erwarteten Überschussrenditen von Anlageportfolios, enthaltend die Schritte:

   a) Wiederholtes Berechnen von aktuellen und/oder langfristigen zeitabhängigen Risikoprämien (RPj) für vorbestimmte systematische Risikofaktoren auf der Grundlage von Asset Classes eines vordefinierten repräsentativen Anlageuniversums,

   b) vorzusgsweise Speicherung der Risikoprämien (RPj) in einer Datenbank.

   c) Bestimmen eines für das Anlageportfolio charakteristischen zeitabhängigen Risikoprofils, welches Risikoprofil die Sensitivität der Asset Classes des Portfolios gegenüber den vorbestimmten systematischen Risikofaktoren beschreibt,

   d) Bestimmen der erwarteten Überschussrenditen ($r_i$) der Asset Classes des Anlageportfolios gemäss der folgenden Formel

$$\begin{pmatrix} r_1 \\ \\ \\ \\ r_n \end{pmatrix} = \begin{pmatrix} \beta_{11} & . & . & . & \beta_{1k} \\ . & & & & \\ . & & & & . \\ . & & & & \\ \beta_{n1} & . & . & . & \beta_{nk} \end{pmatrix} \cdot \begin{pmatrix} RP_1 \\ . \\ . \\ . \\ RP_k \end{pmatrix} \quad (1)$$

   wobei
   $r_i$ die erwartete Überschuss-Rendite für die i-te Asset Class des Portfolios ist,
   $\beta_{ij}$ die Sensitivität der i-ten Asset Class des Portfolios gegenüber dem j-ten Risikofaktor ist,
   $RP_j$ die Risikoprämie für den j-ten Risikofaktor ist,
   n die Anzahl Asset Classes ist,
   k die Anzahl berücksichtigter Risiken ist.

2. Verfahren nach Anspruch 1, **dadurch gekennzeichnet, dass** die Risikoprämien ($RP_j$) durch GMM (Generalized Method of Movments) in einem zentralen Computersystem gemäss der Gleichung

$$\begin{pmatrix} r_{1t} \\ . \\ . \\ . \\ r_{nt} \end{pmatrix} = \begin{pmatrix} \beta_{11} & . & . & . & \beta_{1k} \\ . & & & & \\ . & & & & . \\ . & & & & \\ \beta_{n1} & . & . & . & \beta_{nk} \end{pmatrix} \cdot \begin{pmatrix} \omega_{10} & . & . & . & \omega_{1h} \\ . & & & & \\ . & & & & \\ . & & & & \\ \omega_{ko} & . & . & . & \omega_{kh} \end{pmatrix} \cdot \begin{pmatrix} Z_{0,t-1} \\ . \\ . \\ . \\ Z_{h,t-1} \end{pmatrix} +$$

$$\begin{pmatrix} \beta_{11} & . & . & . & \beta_{1k} \\ . & & & & \\ . & & & & . \\ . & & & & \\ \beta_{n1} & . & . & & \beta_{nk} \end{pmatrix} \cdot \begin{pmatrix} \delta_{1t} \\ . \\ . \\ . \\ \delta_{kt} \end{pmatrix} + \begin{pmatrix} \varepsilon_{1t} \\ . \\ . \\ . \\ \varepsilon_{nt} \end{pmatrix}$$

bestimmt werden,
wobei
$r_{it}$ die Überschussrenditen der Asset Classes des repräsentativen Anlageuniversums sind
$\omega_{jv}$ ein Parameter zur Beschreibung des Wirkungszusammenhangs zwischen den Ausprägungen der v-ten Instrumental-Variable und der Höhe der j-ten Risikoprämie ist,
$Z_{v,\, t-1}$ die Instrumental-Variable, das heisst die im Zeitpunkt $t_{-1}$ beobachtbare Ausprägung zur Prognose globaler Risikoprämien ist,
$\delta_{it}$ der Risikofaktor bzw. die nicht antizipierte Komponente der Veränderung des j-ten Risikofaktors gemessen über die Periode t ist,
$\varepsilon_{jt}$ die Residualüberschussrendite, das heisst die unsystematische Komponente der über die Periode T gemessenen Überschussrendite der i-ten Asset Class ist und
h die Anzahl der berücksichtigten Instrumente ist,
Und wobei die Risikoprämie (RP) als

$$\begin{pmatrix} \omega_{10} & . & . & . & \omega_{1h} \\ . & & & & \\ . & & & & \\ . & & & & \\ w_{mo} & . & . & . & \omega_{mh} \end{pmatrix} \cdot \begin{pmatrix} z_{0,t-1} \\ . \\ . \\ . \\ z_{m,t-1} \end{pmatrix}$$

definiert ist.

3. Verfahren nach einem der Ansprüche 1 oder 2, **dadurch gekennzeichnet, dass** die β-Werte (βij) des Risikoprofils eines anlegerspezifischen Portfolios durch lineare Regression berechnet werden.

4. Verfahren nach einem der Ansprüche 1 bis 3, **dadurch gekennzeichnet, dass** zum Durchführen von Schritt d) der Anwender mit einem Client auf ein zentrales Computersystem zugreift, in welchem zeitabhängige Risikoprämien ($RP_j$) und zeitabhängige Risikoprofile ($\beta_{ij}$) ermittelt und abgespeichert werden.

5. Verfahren nach einem der Ansprüche 1 bis 4, **dadurch gekennzeichnet, dass** die erwartete Überschussrendite für jede Asset Class des Portfolios in Fundamentalkomponenten aufgeteilt wird, die den jeweiligen Anteil der einzelnen Risikofaktoren an der Rendite bezeichnen und, dass die Aufteilung der Überschussrendite vorzugsweise grafisch dargestellt wird.

6. Verfahren nach einem der Ansprüche 1 bis 5, **dadurch gekennzeichnet, dass** in Schritt a) langfristige Risikoprämien und aktuelle Risikoprämien bestimmt werden und dass in Schritt d) auf Grund der aktuellen und der langfristigen Risikoprämien aktuelle und langfristig erwartete Überschussrenditen bestimmt werden.

7. Verfahren nach einem der Ansprüche 1 bis 6, **dadurch gekennzeichnet, dass** als Risikofaktoren Zinssätze, Wechselkurse, Aktienmarkt und Rohstoffpreise berücksichtigt werden.

8. Datenverarbeitungssystem zum Durchführen des Verfahrens nach einem der Ansprüche 1 bis 7, enthaltend

- Mittel zum automatischen Bestimmen von aktuellen und/oder langfristigen zeitabhängigen Risikoprämien ($RP_j$).
- Mittel zum Speichern der sich zeitlich verändernden Risikoprämien ($RP_j$).
- Mittel zum Bestimmen von Faktoren ($\beta_{ij}$) eines zeitabhängigen Risikoprofils für ein Anlageportfolio, welches die Sensitivität der Asset Classes des Anlageportfolios gegenüber systematischen Risikofaktoren beschreibt,
- Mittel zum Berechnen von erwarteten Überschussrenditen der Asset Classes eines Anlageportfolios gemäss der Formel

$$\begin{pmatrix} r_1 \\ \cdot \\ \cdot \\ \cdot \\ r_n \end{pmatrix} = \begin{pmatrix} \beta_{11} & \cdot & \cdot & \cdot & \beta_{1k} \\ \cdot & & & & \\ \cdot & & & & \cdot \\ \cdot & & & & \\ \beta_{n1} & \cdot & \cdot & \cdot & \beta_{nk} \end{pmatrix} \cdot \begin{pmatrix} RP_1 \\ \cdot \\ \cdot \\ \cdot \\ RP_k \end{pmatrix}$$

wobei
$r_i$ die erwartete Rendite für die i-te Asset Class des Portfolios ist,
$\beta_{ij}$ die Sensitivität der i-ten Asset Class des Portfolios gegenüber dem j-ten Risikofaktor ist,
$RP_j$ die Risikoprämie für den j-ten Risikofaktor ist,
n die Anzahl Asset Classes ist und
k die Anzahl berücksichtigter Risiken ist.

9. Datenverarbeitungssystem nach Anspruch 8, **dadurch gekennzeichnet, dass** das System Mittel zum direkten Einlesen von Marktdaten aufweist.

10. Datenverarbeitungssystem nach einem der Ansprüche 8 oder 9, **dadurch gekennzeichnet, dass** das System zur Bestimmung der erwarteten Überschussrenditen der Asset Classes einer Mehrzahl von Anlageportfolios ausgebildet ist,
wobei das System eine Schnittstelle aufweist, über welche die erwarteten Überschussrenditen der Asset Classes eines anlegerspezifischen Anlageportfolios durch einen räumlich vom Datenverarbeitungssystem getrennten Anleger abfragbar sind.

11. System nach einem der Ansprüche 8 bis 10, **dadurch gekennzeichnet, dass** das System Ausgabemittel aufweist, mittels welchen die erwarteten Renditen für jede Asset Class eines Anlageportfolios einzeln, vorzugsweise auf einen dezentralen Client grafisch darstellbar sind.

12. Vorrichtung nach Anspruch 11, **dadurch gekennzeichnet, dass** das System Mittel zum grafischen Darstellen der einzelnen, von den einzelnen Risikofaktoren abhängigen Fundamental Komponenten der erwarteten Überschussrenditen der einzelnen Asset Classes aufweist.

13. Client System zum Bestimmen von erwarteten Überschussrenditen eines Benutzerspezifischen Anlageportfolios, enthaltend

- Mittel zum Identifizieren des Benutzers,

- eine Datenschnittstelle, mittels welcher das Client-System mit einem Serversystem verbindbar ist, mit welchem erwartete Überschussrenditen des Anlageportfolios berechenbar sind,
- Mittel zum Anzeigen der erwarteten Überschussrendite des Anlageportfolios, insbesondere der erwarteten Renditen der einzelnen Asset Classes des Anlageportfolios.

**14.** Computerprogrammprodukt, das direkt in den internen Speicher eines digitalen Computers geladen werden kann und das Softwarecodeabschnitte umfasst, mit denen die Schritte gemäss einem der Ansprüche 1 bis 7 ausgeführt werden, wenn das Produkt auf einem Computer läuft.

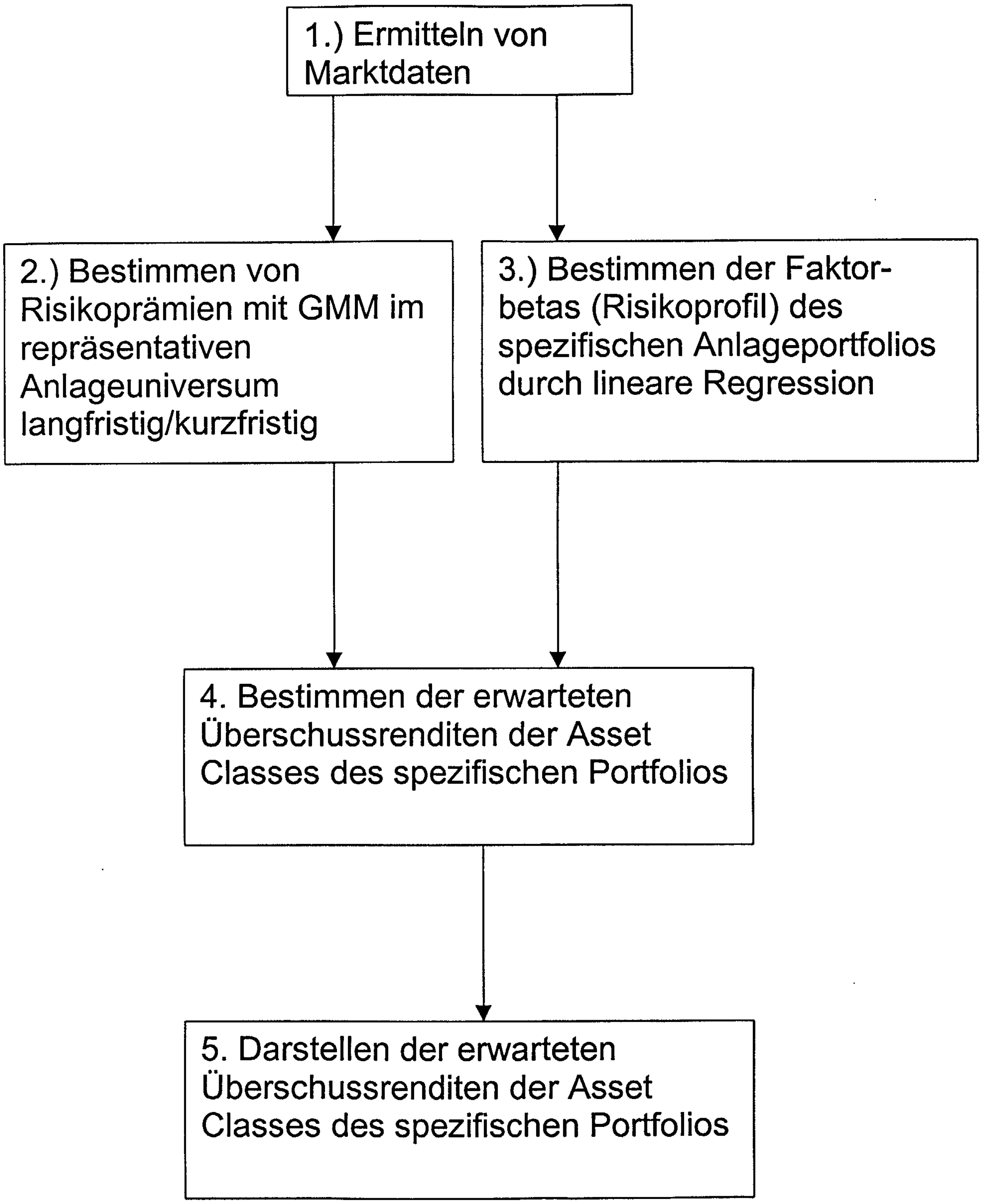
1.) Ermitteln von Marktdaten
2.) Bestimmen von Risikoprämien mit GMM im repräsentativen Anlageuniversum langfristig/kurzfristig
3.) Bestimmen der Faktor-betas (Risikoprofil) des spezifischen Anlageportfolios durch lineare Regression
4. Bestimmen der erwarteten Überschussrenditen der Asset Classes des spezifischen Portfolios
5. Darstellen der erwarteten Überschussrenditen der Asset Classes des spezifischen Portfolios

*Fig. 1*

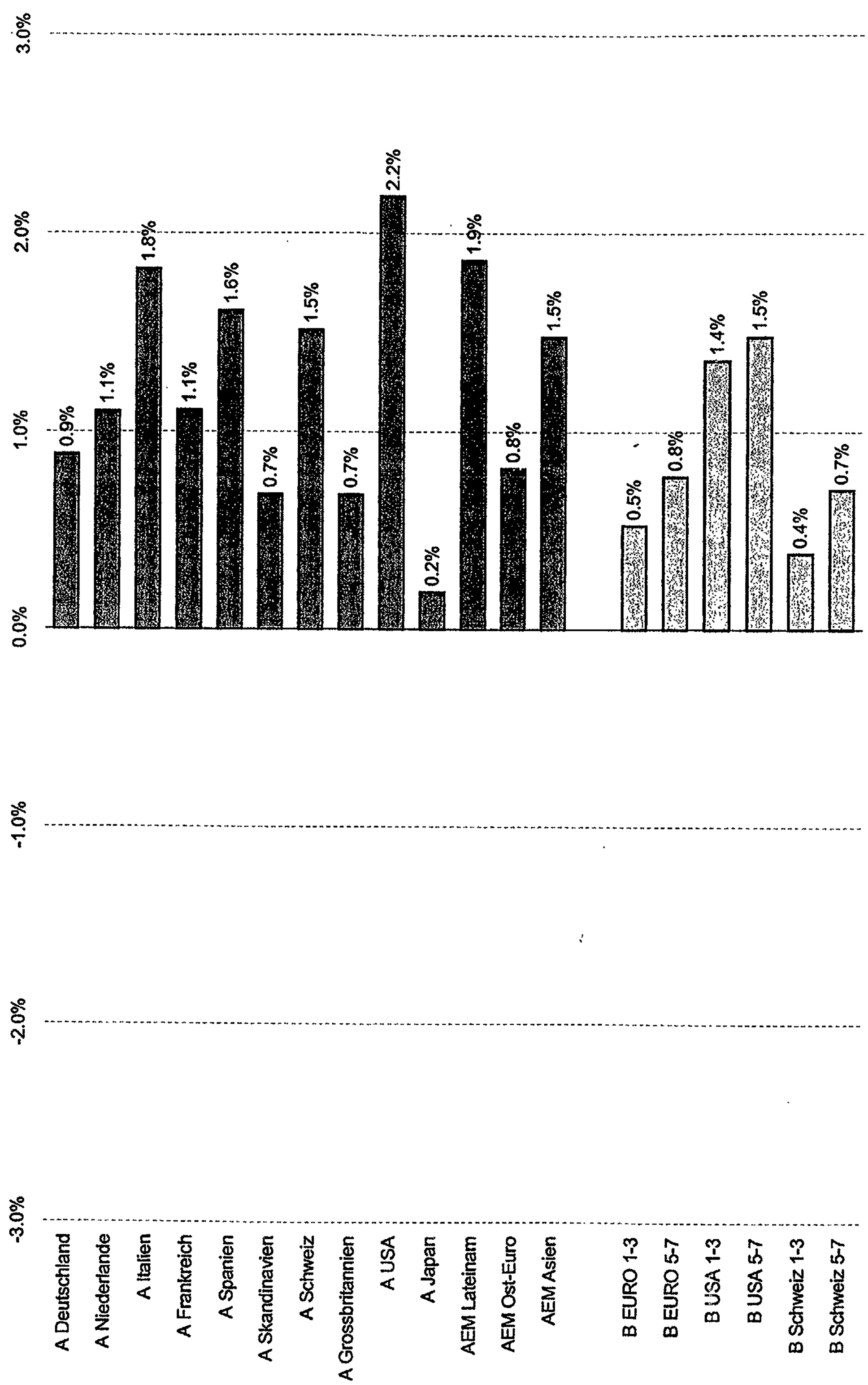
3.0%
2.0%
1.0%
0.0%
-1.0%
-2.0%
-3.0%
0.9%
1.1%
1.8%
1.1%
1.6%
0.7%
1.5%
0.7%
2.2%
0.2%
1.9%
0.8%
1.5%
0.5%
0.8%
1.4%
1.5%
0.4%
0.7%
A Deutschland
A Niederlande
A Italien
A Frankreich
A Spanien
A Skandinavien
A Schweiz
A Grossbritannien
A USA
A Japan
AEM Lateinam
AEM Ost-Euro
AEM Asien
B EURO 1-3
B EURO 5-7
B USA 1-3
B USA 5-7
B Schweiz 1-3
B Schweiz 5-7

FIG. 2

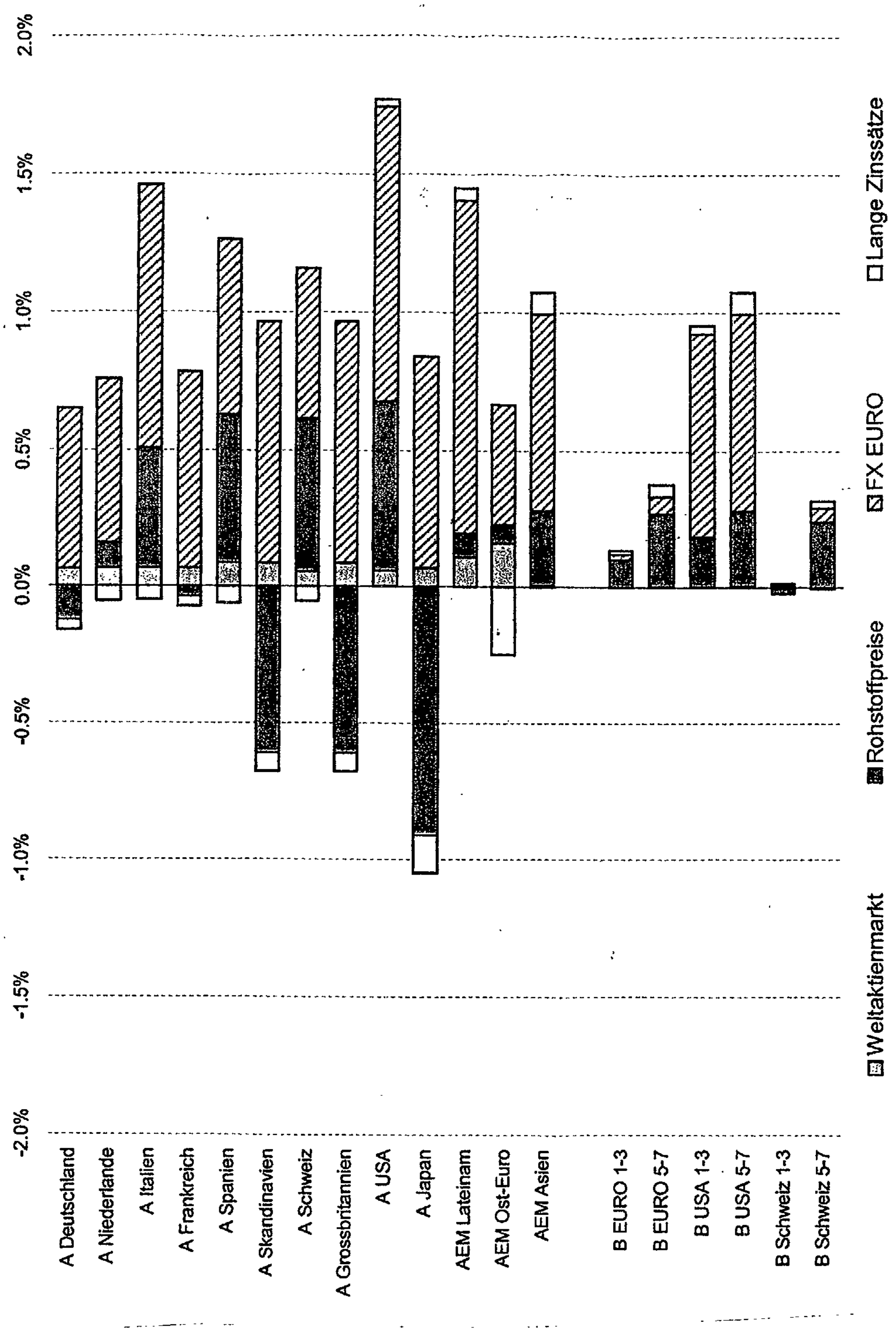
2.0%
1.5%
1.0%
0.5%
0.0%
-0.5%
-1.0%
-1.5%
-2.0%
A Deutschland
A Niederlande
A Italien
A Frankreich
A Spanien
A Skandinavien
A Schweiz
A Grossbritannien
A USA
A Japan
AEM Lateinam
AEM Ost-Euro
AEM Asien
B EURO 1-3
B EURO 5-7
B USA 1-3
B USA 5-7
B Schweiz 1-3
B Schweiz 5-7
Weltaktienmarkt
Rohstoffpreise
FX EURO
Lange Zinssätze

FIG. 3

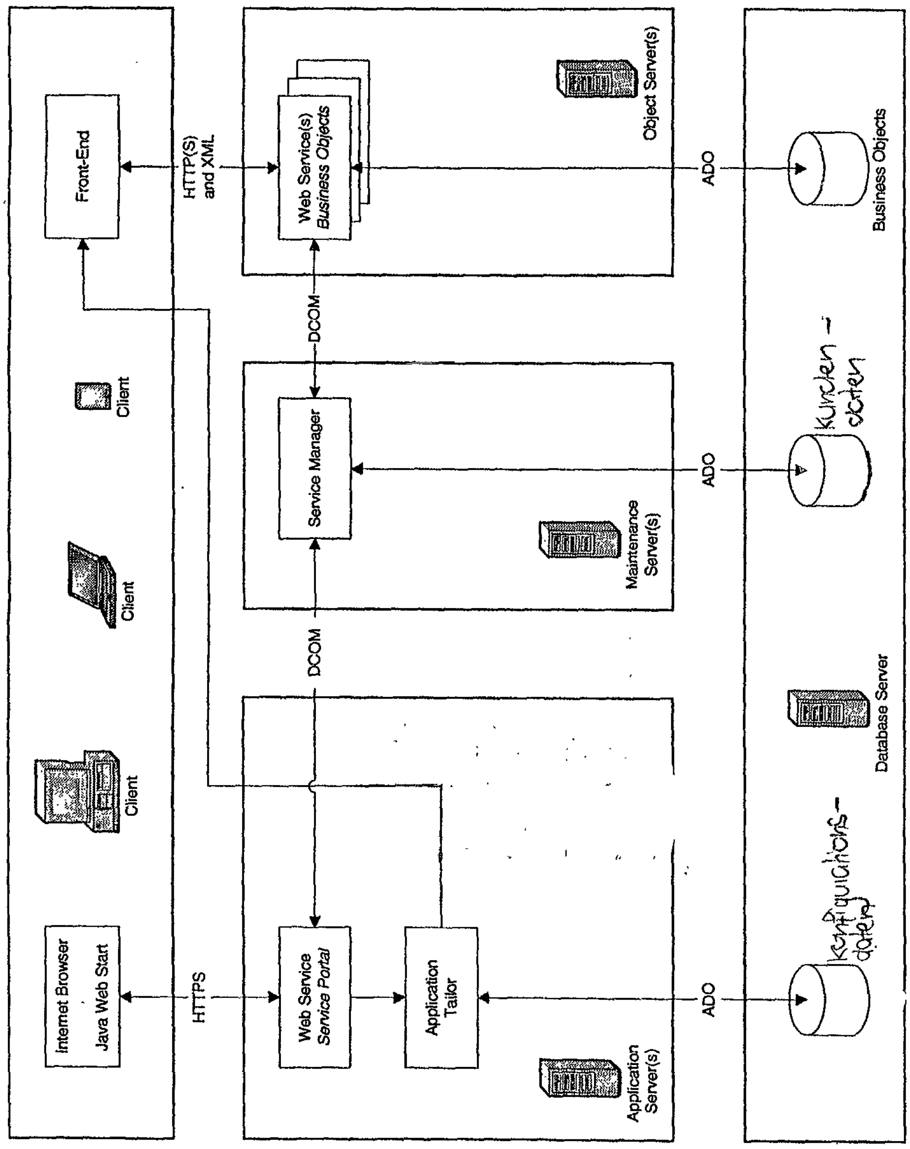
Front-End
Client
Client
Client
Internet Browser
Java Web Start
HTTP(S)
and XML
HTTPS
Web Service(s)
Business Objects
Object Server(s)
DCOM
Service Manager
Maintenance
Server(s)
DCOM
Web Service
Service Portal
Application
Tailor
Application
Server(s)
ADO
ADO
ADO
Business Objects
Kunden-
daten
Database Server
Konfigurations-
daten

FIG. 4

Europäisches Patentamt

# ERKLÄRUNG

die nach Regel 45 des Europäischen Patentübereinkommens für das weitere Verfahren als europäischer Recherchenbericht gilt

Nummer der Anmeldung
EP 01 81 0762

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind. | KLASSIFIKATION DER ANMELDUNG (Int.Cl.7) |
|---|---|
| Grund: | G06F17/60 |

Eine sinnvolle Recherche auf der Grundlage aller Ansprüche ist nicht möglich, da diese sich beziehen auf Verfahren für geschäftliche Tätigkeiten (Artikel 52 (2)(c) EPÜ) oder generisch definierte Implementationen für dessen (Richtlinien Teil B, Kapitel VIII, 1-6).

Der Anmelder wird darauf hingewiesen, daß im Zuge der Prüfung eine Recherche durchgeführt werden kann, sollten die einer Erklärung gemäß Regel 45 EPÜ zugrundeliegenden Mängel behoben worden sein (Vgl. EPA-Richtlinien C-VI, 8.5).

| Recherchenort | Abschlußdatum | Prüfer |
|---|---|---|
| DEN HAAG | 7. Januar 2002 | Gardiner, A |

EPO FORM 1504 (P04C39)